# EUROPÄISCHE PATENTSCHRIFT

(11) **EP 2 943 697 B1**
(45) Veröffentlichungstag und Bekanntmachung des Hinweises auf die Patenterteilung: **29.03.2017**
(21) Anmeldenummer: 13815773.0
(22) Anmeldetag: 27.12.2013
(51) Int. Cl.: F16D 55/02

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 09.01.2013 DE 102013100178
(43) Veröffentlichungstag der Anmeldung: 18.11.2015
(73) Patentinhaber: KNORR-BREMSE Systeme für Nutzfahrzeuge GmbH, 80809 München (DE)
(72) Erfinder: ASEN, Alexander, 94428 Eichendorf (DE)
(86) Internationale Anmeldenummer: PCT/EP2013/078032
(87) Internationale Veröffentlichungsnummer: WO 2014/108315

(56) Entgegenhaltungen:
- EP-A1- 1 942 286
- EP-A1- 2 514 989
- DE-A1-102010 019 472
- DE-C1- 19 855 614

## Beschreibung

Die Erfindung betrifft eine Scheibenbremse für ein Nutzfahrzeug nach dem Oberbegriff des Anspruchs 1.

Der Bremssattel einer solchen Scheibenbremse, in dem zwei, bei einer Bremsung an eine Bremsscheibe anpressbare Bremsbeläge angeordnet sind, weist einen Aufnahmeraum zur Unterbringung einer Zuspanneinrichtung mit Stellspindeln auf, wobei diese Stellspindeln mit angeschlossenen Druckstücken gegen die Bremsbeläge pressbar sind.

Bei einer Montage der Zuspanneinrichtung wird diese durch eine Montageöffnung in den Aufnahmeraum geführt, der danach durch eine Verschlussplatte verschlossen wird, die von den Stellspindeln durchtreten wird. Dabei dient die Verschlussplatte auch als Tragteil von Faltenbälgen, Dichtungen oder dergleichen. Zur Befestigung der Verschlussplatte kommen Schrauben zum Einsatz, die im Umfangsbereich angeordnet und in Gewindebohrungen des Bremssattels eingedreht sind.

Eine solche Befestigung der Verschlussplatte wird zum Stand der Technik in der DE 10 2010 19 472 A1 sowie der EP 1 942 286 A1 beschrieben.

Um den Aufnahmeraum vor Feuchtigkeit und Schmutz zu schützen, liegt die Verschlussplatte abgedichtet am Bremssattel an, wozu beispielsweise eine Dichtschnur vorgesehen ist, die sowohl umlaufend am Randbereich der Verschlussplatte wie auch an einer Auflagefläche des Bremssattels anliegt, die die Montageöffnung begrenzt. Diese Dichtschnur besteht aus einem elastischen Material, das durch den Anschraubdruck beim Anbringen der Verschlussplatte derart gequetscht wird, dass eine ausreichende Dichfinrirkung erzielt wird.

Zur Erreichung eines solchen Anpressdrucks sind eine entsprechende Anzahl von Schrauben erforderlich, die eine gleich große Anzahl Gewindebohrungen im Bremssattel bedingen, was naturgemäß nur mit einem entsprechend hohen, Kosten verursachenden Aufwand möglich ist.

Zur Positionierung der Gewindebohrungen sind überdies jeweils ausreichende Materialanhäufungen am Bremssattel erforderlich, die zum einen nur unter Inkaufnahme einer Gewichtszunahme des Bremssattels möglich sind und zum anderen, da der zur Verfügung stehende Einbauraum für die Scheibenbremse begrenzt ist, das lichte Abmaß der Montageöffnung einschränken.

Des Weiteren gestaltet sich die Montage bzw. Demontage der Verschlussplatte durch das Anziehen und Lösen der Vielzahl zum Einsatz kommender Schrauben zeitaufwendig und teuer.

Damit wird die bekannte Scheibenbremse den Forderungen nach einer kostengünstigen Herstellung sowie einer kostengünstigen Montage bzw. Demontage nicht gerecht.

Der Erfindung liegt die Aufgabe zugrunde, eine Scheibenbremse der gattungsgemäßen Art so zu gestalten, dass sie einfacher und kostengünstiger herstell- und montierbar ist.

Durch die Erfindung wird nun die Möglichkeit geschaffen, auf einen Teil der Schrauben und damit auf einen Teil der Materialanhäufungen zur Einbringung von Gewindebohrungen im Bremssattel zu verzichten. Damit ergibt sich eine nicht unerhebliche Gewichtsersparnis einerseits und andererseits die Möglichkeit, die Montageöffnung in ihrem lichten Abmaß größer zu gestalten, was die Montage der in den Aufnahmeraum einzubringenden Funktionsteile, insbesondere die Zuspanneinrichtung, erheblich erleichtert sowie die Montagearbeiten selbst verkürzt, mit den sich daraus ergebenden Kostenvorteilen.

Auch die Herstellung des Bremssattels gestaltet sich nun durch den Teilverzicht auf Gewindebohrungen vorteilhaft, da eine entsprechende Bearbeitung, sprich ein Einbringen von Gewindebohrungen in diesem Bereich nicht mehr erforderlich ist.

Die erfindungsgemäß vorgesehenen Einschnitte, in die Stege der abgewinkelten Laschen der Verschlussplatte eingreifen, sind mit geringem fertigungstechnischen Aufwand herzustellen, wobei sie gegebenenfalls bereits beim Gießen des üblicherweise aus Gusseisen hergestellten Bremssattels eingebracht werden können.

Wie bisher ist die Verschlussplatte in einem ersten Teilbereich mit dem Bremssattel verschraubt, so dass eine zerstörungsfreie Demontage gewährleistet ist, die die Wiederverwendung der Verschlussplatte nach einem Abnehmen, beispielsweise zum Zwecke einer Reparatur von Funktionsteilen, und Erneuerung der Dichtung ermöglicht.

Die notwendige Bearbeitung des Bremssattels im Bereich der Anlagefläche für die Verschlussplatte ist dabei derart, dass die Verschlussplatte auch im zweiten Teilbereich, also in dem Teilbereich, in dem die Verschlussplatte formschlüssig befestigt ist, unter einem gewissen Anpressdruck anliegt, so dass die erwähnte Verformung der Dichtung in ausreichendem Maße erfolgt.

Nach einem weiteren Gedanken der Erfindung ist vorgesehen, die Einschnitte zur Aufnahme der Stege an der Unterseite des Bremssattels anzuordnen, wobei die abgewinkelten Laschen sich an die Kante der Verschlussplatte anschließen. Die Verschraubung erfolgt danach am oberen Randbereich der Montageöffnung bzw. dem zugeordneten Randbereich der Verschlussplatte. Zweckmäßigerweise ist die Verschraubung bis zu einer gedachten Längsachse der Verschlussplatte bzw. der Montageöffnung geführt.

Zur Montage wird die Verschlussplatte, an die zuvor die Dichtung, beispielsweise besagte Dichtschnur, angebracht ist, zunächst von unten her mit den Stegen der Laschen in die Einschnitte gesteckt und anschließend verschraubt.

Im Übrigen ist die Verschlussplatte wie bisher als Blechteil durch Stanzen hergestellt, wobei die Laschen durch Kanten angeformt sind.

Weitere vorteilhafte Ausbildungen der Erfindung sind in den Unteransprüchen gekennzeichnet.

Ein Ausführungsbeispiel der Erfindung sowie einen Teil einer Scheibenbremse nach dem Stand der Technik werden nachfolgend anhand der beigefügten Zeichnungen beschrieben.

Es zeigen:
- Figur 1: einen Teil einer Scheibenbremse nach dem Stand der Technik in einer perspektivischen Ansicht
- Figur 2: einen Schnitt durch einen Teil der Scheibenbremse gemäß der Erfindung in einer perspektivischen Unteransicht
- Figur 3: einen Querschnitt durch den Teil nach Figur 2, ebenfalls schaubildlich dargestellt
- Figur 4: eine Einzelheit der Scheibenbremse in perspektivsicher Darstellung.

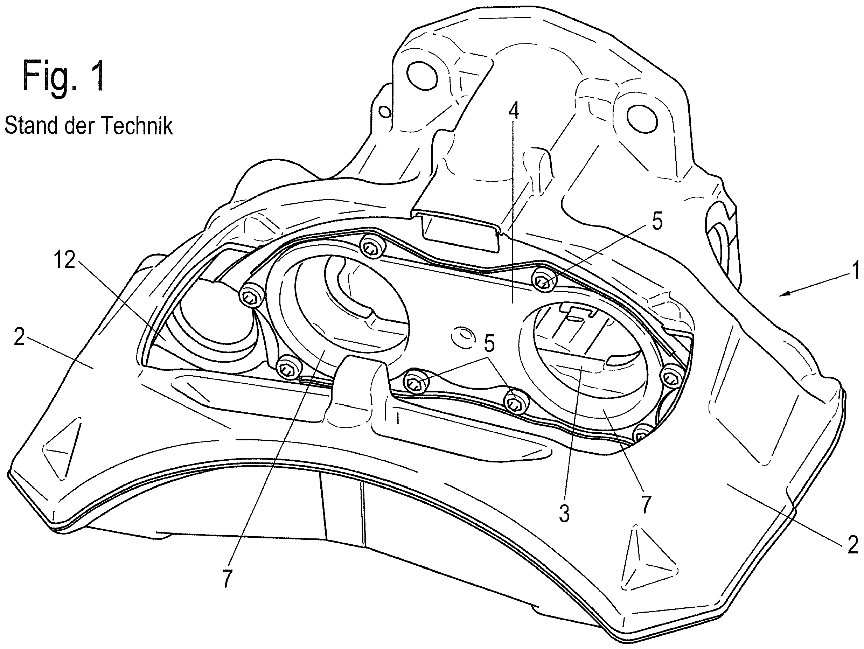

In der Figur 1 ist ein Bremssattel 1 einer Scheibenbremse nach dem Stand der Technik dargestellt, mit einem Aufnahmeraum 3 für Funktionsteile, insbesondere einer Zuspanneinrichtung, wobei der Bremssattel 1 zwei parallel und abständig zueinander angeordnete Zugstreben 2 aufweist, die eine nicht dargestellte Bremsscheibe übergreifen und eine Einschuböffnung 12 für Bremsbeläge seitlich begrenzen.

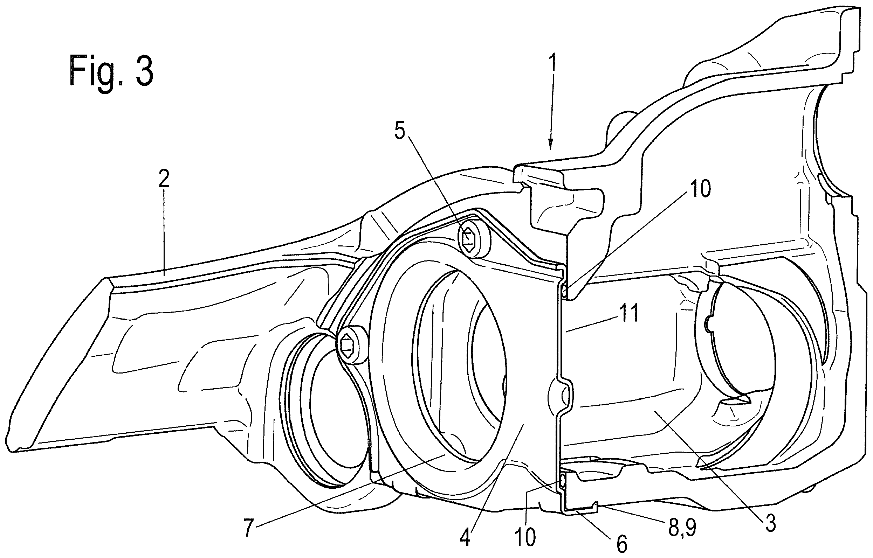

Die genannten Funktionsteile sind über eine Montageöffnung 11 (Figur 3) in den Aufnahmeraum 3 einführbar, der anschließend durch eine Verschlussplatte 4 verschlossen wird, die die Montageöffnung 11 überdeckt. Dabei weist die Verschlussplatte 4 Öffnungen 7 auf, durch die Stellspindeln der Zuspanneinrichtung führbar sind.

Gemäß der Figur 1 wird die Verschlussplatte 4 bisher ausschließlich durch in Gewindebohrungen des Bremssattels 1 eingedrehte Schrauben 5 am Bremssattel 1 befestigt, wobei die Schrauben 5 mehr oder weniger gleichmäßig über den Umfang der Verschlussplatte 4 verteilt sind.

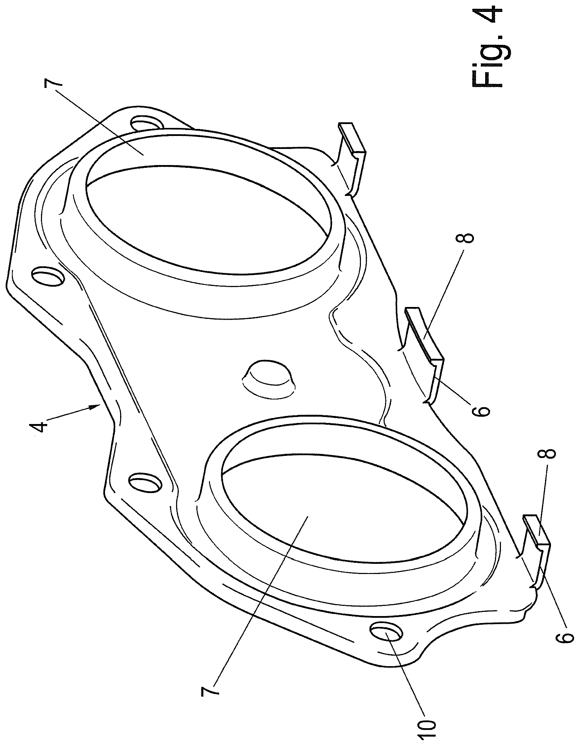

Gemäß der Erfindung sind die Schrauben 5 in einem ersten Teilbereich der Verschlussplatte 4 angeordnet, während in einem zweiten Teilbereich die Verschlussplatte 4 durch abgewinkelte, jeweils mit einem Steg 8 (Figur 4) versehene Laschen 6 formschlüssig mit dem Bremssattel 1 verbunden ist. Diese Stege 8, die parallel und abständig zu der Verschlussplatte 4 im Übrigen verlaufen, greifen in Einschnitte 9 des Bremssattels 1 ein, so dass im Zusammenwirken mit den Schrauben 5 ein fester Verbund der Verschlussplatte 4 am Bremssattel 1 gebildet ist.

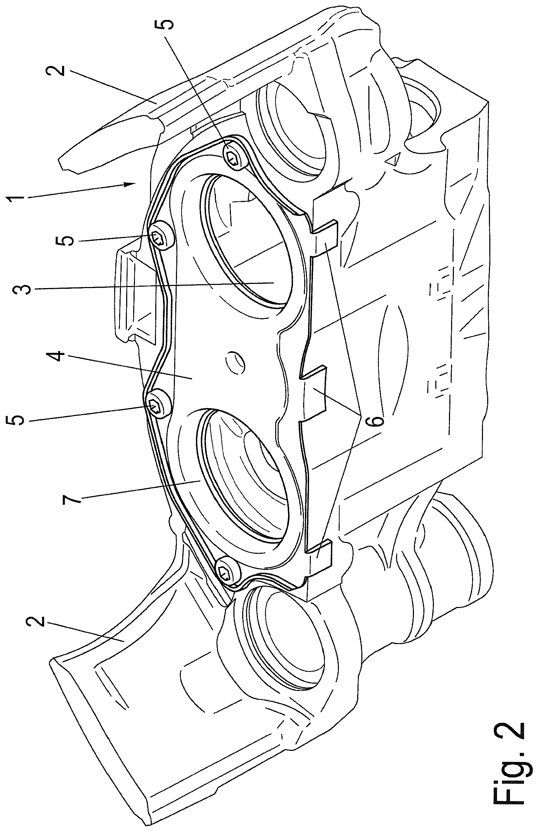

In den Figuren 2 und 3 ist deutlich zu erkennen, dass die Laschen 6 mit den Stegen 8 an der der Einschuböffnung 12 gegenüberliegenden Unterseite des Bremssattels 1 angreifen und zwar derart, dass die Verschlussplatte 4 einen Anpressdruck auf eine Dichtung 10 ausübt, die umlaufend im Randbereich der Verschlussplatte 4 geführt ist und zwischen einer Auflagefläche des Bremssattels 1 und der Verschlussplatte 4 angeordnet ist.

Anstelle mehrerer Einschnitte 9, die jeweils einem Steg 8 zugeordnet sind, kann auch ein durchgehender Einschnitt vorgesehen sein zur Aufnahme aller nebeneinander liegender Stege 8.

## Patentansprüche

1. Scheibenbremse für ein Nutzfahrzeug, mit einem einen Aufnahmeraum (3) für Funktionsteile aufweisenden Bremssattel (1), wobei eine Montageöffnung (11) des Aufnahmeraums (3) durch eine von mindestens einer Steilspindel durchtretenen Verschlussplatte (4) verschlossen ist, die durch Verschrauben zerstörungsfrei lösbar am Bremssattel (1) befestigt ist, **dadurch gekennzeichnet, dass** die Verschlussplatte (4) in einem ersten Teilbereich mit dem Bremssattel (1) verschraubt ist und in einem zweiten Teilbereich abgewinkelte Laschen (6) aufweist, die jeweils mit einem Steg (8) formschlüssig in Einschnitte (9) des Bremssattels (1) eingreifen.

2. Scheibenbremse nach Anspruch 1, **dadurch gekennzeichnet, dass** die Einschnitte (9) zur Aufnahme der Stege (8) an einer Einschuböffnung (12) des Bremssattels (1) gegenüberliegenden Unterseite angeordnet sind.

3. Scheibenbremse nach Anspruch 1 oder 2, **dadurch gekennzeichnet, dass** jedem Steg (8) ein Einschnitt (9) zugeordnet ist.

4. Scheibenbremse nach einem der vorhergehenden Ansprüche, **dadurch gekennzeichnet, dass** ein durchgehender Einschnitt (9) vorgesehen ist, in den die Stege (8) aller Laschen (6) eingreifen.

5. Scheibenbremse nach einem der vorhergehenden Ansprüche, **dadurch gekennzeichnet, dass** die Laschen (6) einstückig mit der Verschlussplatte (4) im Übrigen ausgebildet sind.

6. Scheibenbremse nach einem der vorhergehenden Ansprüche, **dadurch gekennzeichnet, dass** der zweite Teilbereich mit Druck am Bremssattel (1) und/oder einer zwischen dem Bremssattel (1) und der Verschlussplatte (4) angeordneten Dichtung (10) anliegt.

7. Scheibenbremse nach einem der vorhergehenden Ansprüche, **dadurch gekennzeichnet, dass** die Verschraubung in dem der Einschuböffnung (12) des Bremssattels (1) zugewandten oberen Bereich der Verschlussplatte (4) vorgesehen ist, wobei zwei sich gegenüberliegende Schrauben (5) am äußeren Randbereich der Längserstreckung der Verschlussplatte (4) positioniert sind.

8. Scheibenbremse nach einem der vorhergehenden Ansprüche, **dadurch gekennzeichnet, dass** die Verschlussplatte (4) als aus Blech bestehendes Stanzteil ausgebildet ist.

9. Scheibenbremse nach einem der vorhergehenden Ansprüche, **dadurch gekennzeichnet, dass** sich die Laschen (6) abgewinkelt an eine Kante der Verschlussplatte (4) anschließen.

10. Scheibenbremse nach einem der vorhergehenden Ansprüche, **dadurch gekennzeichnet, dass** die Steige (8) parallel zur Verschlussplatte (4) im Übrigen verlaufen.

## Claims

1. Disc brake for a commercial vehicle, comprising a brake calliper (1) having an accommodation space (3) for functional parts, wherein an installation opening (11) of the accommodation space (3) is closed by a closing plate (4), through which at least one actuating spindle passes and which is non-destructively and releasably secured to the brake calliper (1) by bolting, **characterised in that** the closing plate (4) is bolted to the brake calliper (1) in a first sub-region and has angled lugs (6) in a second sub-region, each of which lugs (6) positively engages with a web (8) into notches (9) of the brake calliper (1).

2. Disc brake according to claim 1, **characterised in that** the notches (9) for receiving the webs (8) are located on an underside opposite an insertion opening (12) of the brake calliper (1).

3. Disc brake according to claim 1 or 2, **characterised in that** a notch (9) is assigned to each web (8).

4. Disc brake according to any of the preceding claims, **characterised in that** a continuous notch (9) is provided for the engagement of the webs (8) of all lugs (6).

5. Disc brake according to any of the preceding claims, **characterised in that** the lugs (6) are otherwise designed to be integral with the closing plate (4).

6. Disc brake according to any of the preceding claims, **characterised in that** the second sub-region bears with pressure against the brake calliper (1) and/or against a seal (10) located between the brake calliper (1) and the closing plate (4).

7. Disc brake according to any of the preceding claims, **characterised in that** the bolted connection is provided in the upper region of the closing plate (4) facing the insertion opening (12) of the brake calliper (1), two bolts (5) being positioned opposite one another in the outer edge region of the longitudinal dimension of the closing plate (4).

8. Disc brake according to any of the preceding claims, **characterised in that** the closing plate (4) is designed as a stamped sheet metal part.

9. Disc brake according to any of the preceding claims, **characterised in that** the lugs (6) adjoin an edge of the closing plate (4) at an angle.

10. Disc brake according to any of the preceding claims, **characterised in that** the webs (8) otherwise extend parallel to the closing plate (4).

## Revendications

1. Frein à disque pour un véhicule utilitaire, comprenant un étrier (1) de frein ayant un espace (3) de réception de partie fonctionnelle, dans lequel une ouverture (11) de montage de l'espace (3) de réception est fermée par une plaque (4) de fermeture, qui est traversée par une broche de réglage et qui est fixée à l'étrier (1) de frein de manière amovible sans destruction par vissage, **caractérisé en ce que** la plaque (4) de fermeture est vissée dans une première région partielle à l'étrier (1) de frein et a, dans une deuxième région partielle, des pattes (6) coudées, qui pénètrent respectivement par un rebord (8) à complémentarité de forme dans des entailles (9) de l'étrier (1) de frein.

2. Frein à disque suivant la revendication 1, **caractérisé en ce que** les entailles (9) de réception des rebords (8) sont disposées sur un côté inférieur, opposé à l'ouverture (12) d'entrée, de l'étrier (1) de frein.

3. Frein à disque suivant la revendication 1 ou 2, **caractérisé en ce qu'**une entaille (9) est associée à chaque rebord (8).

4. Frein à disque suivant l'une des revendications précédentes, **caractérisé en ce qu'**il est prévu une entaille (9) continue, dans laquelle pénètrent les rebords (8) de toutes les pattes (6).

5. Frein à disque suivant l'une des revendications précédentes, **caractérisé en ce que** les pattes (6) sont constituées, en outre, d'une seule pièce avec la plaque (4) de fermeture.

6. Frein à disque suivant l'une des revendications précédentes, **caractérisé en ce que** la deuxième région partielle s'applique avec pression à l'étrier (1) de frein et/ou à une garniture (10) d'étanchéité disposée entre l'étrier (1) de frein et la plaque (4) de fermeture.

7. Frein à disque suivant l'une des revendications précédentes, **caractérisé en ce que** le vissage est prévu dans la partie supérieure de la plaque (4) de fermeture tournée vers l'ouverture (12) d'entrée de l'étrier (1) de frein, deux vis (5) opposées étant placées à la partie de bord extérieure de l'étendue longitudinale de la plaque (4) de fermeture.

8. Frein à disque suivant l'une des revendications précédentes, **caractérisé en ce que** la plaque (4) de fermeture est constituée sous la forme d'une pièce découpée en tôle.

9. Frein à disque suivant l'une des revendications précédentes, **caractérisé en ce que** les pattes (6) coudées se raccordent à un bord de la plaque (4) de fermeture.

10. Frein à disque suivant l'une des revendications précédentes, **caractérisé en ce que** les rebords (8) s'étendent, en outre, parallèlement à la plaque (4) de fermeture.
